# EUROPEAN PATENT SPECIFICATION

(11) **EP 1 774 815 B1**
(45) Date of publication and mention of the grant of the patent: **12.09.2018**
(21) Application number: 05779812.6
(22) Date of filing: 25.07.2005
(51) Int. Cl.: H04W 16/14, H04W 28/20

(54) **METHOD AND APPARATUS TO PROVIDE FAIR SPECTRUM SHARING IN MULTIPLE PHYSICAL TRANSMISSION RATE WIRELESS SYSTEMS**
VERFAHREN UND VORRICHTUNG ZUR BEREITSTELLUNG VON FAIREM TEILEN DES SPEKTRUMS IN DRAHTLOSEN SYSTEMEN MIT MEHREREN PHYSISCHEN ÜBERTRAGUNGSRATEN
PROCÉDÉ ET DISPOSITIF DE RÉPARTITION ÉQUITABLE DU SPECTRE DANS DES SYSTÈMES SANS FIL À VITESSE DE TRANSMISSION PHYSIQUE MULTIPLE

(30) Priority: 30.07.2004 US 592932 P
(43) Date of publication of application: 18.04.2007
(73) Proprietor: Koninklijke Philips N.V., 5656 AE Eindhoven (NL)
(72) Inventor: NANDAGOPALAN, Sai Shankar, Briarcliff Manor, NY 10510-8001 (US)
(74) Representative: Ledeboer, Johannes Albertus
(86) International application number: PCT/IB2005/052501
(87) International publication number: WO 2006/013534

(56) References cited:
- US-A1- 2002 136 233
- US-A1- 2003 053 469
- US-A1- 2003 083 095
- US-A1- 2003 181 213
- US-A1- 2004 143 681

## Description

The use of wireless technology in traditionally wired systems has become more commonplace. For example, wireless networks for computers have been implemented in links traditionally reserved for wired connections.

As wireless links become more commonly utilized, improved coordination is needed to handle wireless traffic of wireless stations/nodes sharing a common spectrum. Illustratively, in a wireless network such as a wireless local area network (WLAN), or when collocated wireless systems are deployed, some of the wireless systems may have different spectrum bandwidths or may transmit at different rates than other wireless systems that share the common spectrum. As will become clearer as the present description continues, in known techniques these systems having different spectrum bandwidths/transmission rates can have different transmission opportunities and may be denied access to the spectrum, or may deny access to other wireless systems to an unfair extent. Accordingly, airtime or bandwidth fairness for accessing the shared spectrum optimally among the various collocated wireless systems can be difficult to achieve.

In order to address airtime or spectrum fairness issues in certain known systems exclusivity of portions of the frequency spectrum is effected by licensing its use to a particular provider. In this way, use of a licensed portion of the spectrum is prohibited by users other than the licensee within geographical limits of the licensee. These licenses are granted in the United States and elsewhere by government agencies (e.g., The Federal Communications Commission (FCC)), which also provide compliance criteria and spectrum monitoring.

Unfortunately, the use of licensing to ensure adequate airtime and bandwidth fairness often is not desirable. For example, licenses are expensive, and unnecessarily limit the potential use of licensed spectra, which results in the inefficient use of the spectrum.

Spectrum Agile Radio (SAR) as well as other techniques address efficient use of the unlicensed or public radio spectrum. To wit, these techniques attempt to achieve the fair sharing of radio resources (e.g., wireless stations) by providing spectrum etiquette rules for resources collocated and using a common unlicensed radio spectrum.

In view of the foregoing, there exists a need for a way to provide airtime and bandwidth fairness to wireless systems in unlicensed spectra thus satisfying their quality of service (QoS) needs and simultaneously utilizing the radio spectrum efficiently.

US 2003/0181213 discloses systems and methods to enable different types of radio communication devices to communicate using a common language in order to enable the devices to regulate their use of the spectrum.

US 2003/0083095 discloses a digital device with a plurality of collocated wireless networks and a coordinator unit coupled to the plurality of wireless networks which provides a transmission reservation system wherein a wireless network with a need to transmit can request and receive a reservation for time to transmit.

US 2002/0136233 discloses a system for coordinating transmissions in a wireless network with a plurality of frequency overlapping protocols are used to exchange information between devices. A coordination point device monitors that QoS parameters stay with acceptable ranges and impeding collisions.

### SUMMARY OF THE INVENTION

The reader is referred to the appended independent claims. Some preferred features are laid out in the dependent claims.

In accordance with an example embodiment, a method of providing bandwidth fairness among multiple wireless systems includes providing an unlicensed communication spectrum. The method also includes co-locating a plurality of wireless systems, wherein at least two different wireless systems have different spectral bandwidths and channel capacities. In addition, the method includes determining the bandwidth requirements of each of the systems and allocating a bandwidth or a communication period to each of the systems for a particular interval.

In accordance with another example embodiment, a wireless network includes an unlicensed radio spectrum and a plurality of wireless stations wherein the at least two of the stations have different bandwidth requirements. Based on the bandwidth requirements of each station, a bandwidth or a communication period is allocated to each of the stations for a particular interval.

The invention is best understood from the following detailed description when read with the accompanying drawing figures. It is emphasized that the various features are not necessarily drawn to scale. In fact, the dimensions may be arbitrarily increased or decreased for clarity of discussion.
Fig. 1 is a schematic view of a wireless system, which includes collocated wireless systems in accordance with an example embodiment.
Figs. 2a and 2b show the bandwidth and bandwidth overlap of different wireless systems in accordance with an example embodiment.
Figs. 3a and 3b are conceptual diagrams showing bandwidth-based fairness and communication time-based fairness in accordance with an example embodiment.

In the following detailed description, for purposes of explanation and not limitation, example embodiments disclosing specific details are set forth in order to provide a thorough understanding of the present invention. However, it will be apparent to one having ordinary skill in the art having had the benefit of the present disclosure that the present invention may be practiced in other embodiments that depart from the specific details disclosed herein. Moreover, descriptions of well-known devices, methods and materials may be omitted so as to not obscure the description of the present invention. Finally, wherever practical, like reference numerals refer to like features.

Briefly, and as set forth in connection with illustrative embodiments herein, methods and apparati that provide spectrum fairness in wireless communications are described. Illustratively, a plurality of wireless systems is disposed within a particular geographical area and share a common unlicensed communication spectrum. In certain example embodiments, the spectrum fairness is achieved by allocating each different wireless system, sharing the spectrum, with a designated time interval in which to communicate, where each time interval is proportional to the requirements of that particular system. Every wireless system having the same time is a special case of the proportional time allocation.

In other example embodiments, spectrum fairness is achieved by allocating each of the different wireless system, sharing the same spectrum, with the channel capacities proportional to their requirements. Providing the same channel capacity for different wireless system sharing the same unlicensed spectrum is the special case of proportional bandwidth allocation. In both the example embodiments, the stations belonging to a wireless system with the greater bandwidth may communicate a greater amount of information depending on the proportional of time or channel capacity they are allowed to transmit.

Regardless of the method chosen, the etiquette schemes of the example embodiments provides the fair sharing of an unlicensed frequency spectrum without significant QoS reducing interference.

It is emphasized that the different wireless systems of the example embodiments may exist in the same unlicensed spectrum and share the spectrum bandwidth differently. To this end, for purposes of illustration and not limitation, the systems may include a Bluetooth system and a WLAN functioning in a 2.4GHz band. Illustratively, the Bluetooth system has a bandwidth of approximately 1.0 MHz and the WLAN system has a bandwidth of approximately 20.0 MHz.

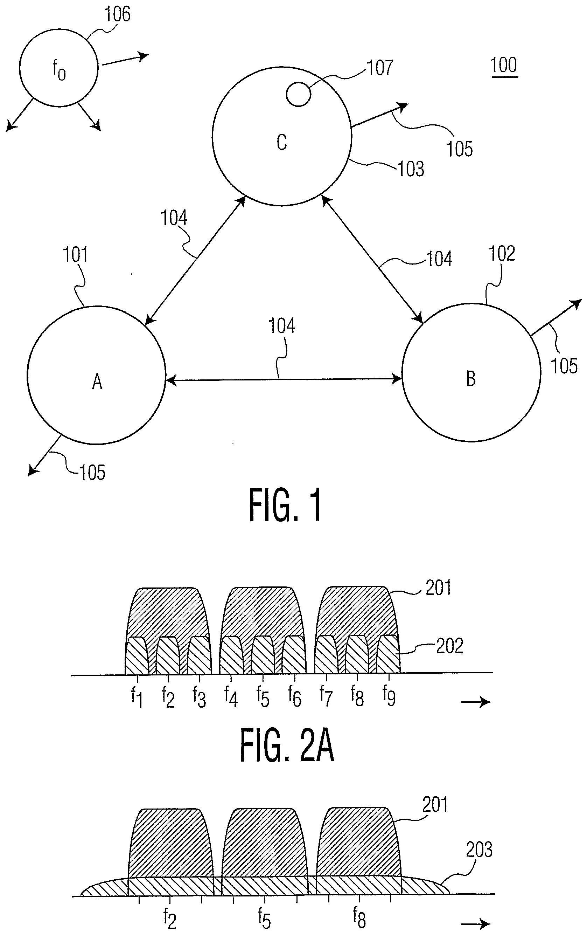

Fig. 1 shows a wireless system 100 in accordance with an example embodiment. The wireless system 100 illustratively includes a first type of wireless system (A) 101, a second type of wireless system (B) 102 and a third type of wireless system (C) 103. Of course, the number of wireless systems that share the unlicensed spectrum of system 100 in the present example embodiment is merely illustrative. Clearly, more or fewer systems than the three systems described may comprise the system 100 and may share the unlicensed spectrum.

Each of the wireless systems 101-103 may include a plurality of wireless stations or subsystems, which operate at a prescribed frequency and have a prescribed bandwidth. For example, as shown in Fig. 2a, the radio frequency grid 201 of system type A 101 has center frequencies f₂, f₆ and f₈. Wireless systems operating according to the wireless protocol of system type A 101 would each have a bandwidth as shown. Similarly, there are illustratively nine wireless devices in the system type B 102 operate in a radio frequency grid 201, with each system having a unique center frequency and a common bandwidth. Finally, wireless system type C 103 operates in a radio frequency grid 203 at a center frequency f₅ and has a bandwidth as shown. As can be appreciated there are three wireless systems of type A 101, nine systems of type B 102 and one system of type C 103.

As can be readily appreciated, the system 100 of the example embodiment of Fig. 1 includes wireless systems that are relatively narrowband systems, relatively medium band systems and relatively wideband systems. To wit, the bandwidth of the wireless system type A 102 is nine times less than those of wireless system type C 103 and three times less than those of wireless system type B 102. Similarly the bandwidth of wireless system B is three times less than the bandwidth of wireless system C 103.

According to known etiquette in CSMA/CA systems operating in a non-licensed spectrum, three successful transmissions in the (narrowband) system B 102 at channels with center frequencies f₁, f₂ and f₃, will occur during which the (wideband) system C and the (medium band) system B with center frequency f2 will perceive the channel's being occupied. As can be appreciated, by known methods, the narrower band systems will be afforded more opportunities to transmit than wider band systems. As will become clearer as the present description continues, the etiquette rules of the example embodiments provide spectrum sharing that substantially eliminates disproportionate transmission opportunities as well as other operational intervals, and thereby substantially improve the QoS of the system 100 compared to known systems and the overall spectrum efficiency.

According to example embodiments, the wireless system 100 may have multiple physical transmission rates as referenced previously. Moreover, according to an illustrative embodiment the devices of the wireless systems 101-103 may be any suitable device or subsystem having an underlying MAC layer that operates in accordance with carrier sense multiple access with collision avoidance (CSMA/CA) protocol. It is emphasized that the systems of the example embodiments are not restricted to MAC protocols that have only CSMA/CA as their protocol. For example, the systems 101-103 may employ protocols such as Aloha, Slotted Aloha, Time Division Multiple Access (TDMA), Frequency Division Multiple Access (FDMA), Time Division Duplex or Tree Contention resolution protocols to mention only a few. However, in order to describe the example embodiments in a facile manner, only the CSMA/CA protocol is referenced. In addition, it is noted that the devices of the systems may be mobile computers, personal digital assistants and portable appliances such as cellular generalized packet radio service (GPRS) phones, ultra-wideband (UWB) devices, Bluetooth devices and wireless local area networks (WLAN) devices operating according to IEEE standard 802.11 and its progeny, which provide for multiple physical transmission rates. It is further noted that these devices are merely illustrative and are certainly not an exhaustive list.

Each of the devices of the wireless systems 101-103 may communicate with other devices in the same wireless system for data and voice communication as shown at 104 and with other devices of different wireless systems to communicate some control information as shown at 105. In certain example embodiments, an optional control channel 106 provides each system 101-103 with information of the co-located systems as well certain operating parameters, which provide the allocation of time or bandwidth to each of the systems 101-103. As will become clearer as the present description continues, these parameters may be one or more of: the minimum contention window (CWₘᵢₙ), the maximum contention window (CWₘₐₓ), the interframe spacing (IFS) and the transmission bursting (TXOP). According to example embodiments described more fully herein, these parameters are adjusted based on the number and type of systems present in order to provide spectrum fairness to all systems present and sharing an unlicensed transmission spectrum. Finally, it is noted that the control channel 106 may be centralized or distributed as described more fully herein.

In accordance with certain example embodiments, the coordination of communication by allocation of communication time or bandwidth is effected using the control channel 106. In other example embodiments, the control channel is foregone, and the coordination of communication is effected by having each system transmit a beacon at periodic intervals. The former embodiments are described presently.

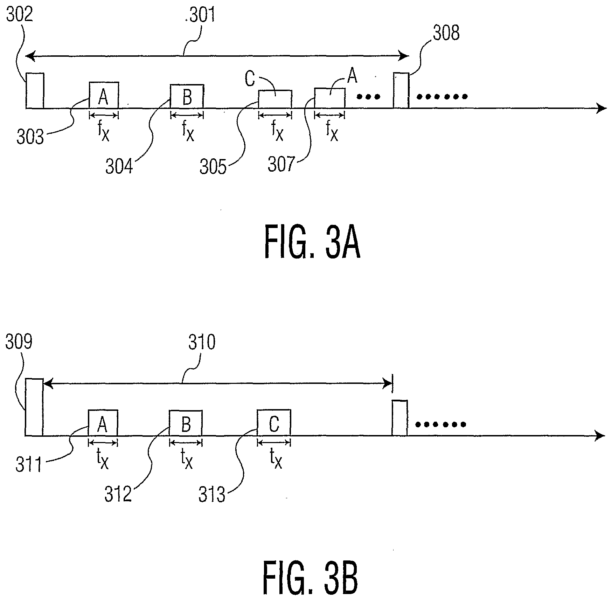

As referenced previously, the coordination of communication of wireless systems 101-103 may be effected by allocating bandwidth or time by means of communication among different systems in the control channel. Fig. 3a is a conceptual representation of a control information exchange interval 301 that separates beacons 302. The beacons 302 are illustratively transmitted over the control channel 106. The beacons 302 contain control information that is understood by all systems. As will become clearer as the present description continues, different wireless systems (e.g., systems 101-103) communicate their requests for bandwidth allocation or time allocation in their respective beacons transmitted in the control channel.

Illustratively, each system 101-103 is allocated a particular bandwidth interval over which it may communicate with other systems devices outside of and within its system. These communication intervals each have a substantially identical magnitude for all systems. To this end, regardless of the bandwidth capabilities of a particular system, each system transmits a beacon within the control channel frequency band. As can be appreciated, depending on the bandwidth capability of a particular system, it may require more or fewer intervals than other systems in order that all systems are given equal access to the spectrum. This equal is described in connection an example embodiment presently.

During the control information exchange interval 301 that commences at the termination of beacon 302, the first system 101 (A) transmits over a certain bandwidth 302 having a fixed value fₓ commencing at a certain time and for a certain finite time period as shown. Thereafter, the second system 102 (B) transmits over a certain bandwidth value 303, fₓ, by transmitting at the same rate as the first system and for the same time interval. Finally, the third system transmits over an identical bandwidth 304.

As can be appreciated from the illustrative systems described in connection with the example embodiments of Figs. 1-2b, the bandwidth of system 102 is 1/9 of system 103 and 1/3 of system 101. As described, this can increase the access of system 102 to the spectrum to the exclusion of the other systems 101 and 103. In the present example embodiments, spectrum fairness is achieved by providing each system 101-103 a number of intervals in proportion to its relative bandwidth requirements. For example, the system 103, which has a bandwidth that is nine times that of system 101 and may by known techniques have fewer access opportunities because it shares the spectrum with other 12 wireless systems (nine systems from type B and three systems from type A), may be granted additional access opportunities to the spectrum by the appropriate adjustment of parameters such as CWmin, TXOP and IFS. Similar allocation can be made for other wireless systems.

The beacon 108 of each wireless system is transmitted in the control frame and includes the frequency that the wireless system is operating upon (center frequency), the spectrum bandwidth allocated to the type A, B or C systems shown in Fig. 3a, bandwidth requirements or air time requirements, number of devices in this system and the contention parameters used currently.

These beacons 108 are transmitted periodically by the corresponding wireless systems. The beacons are also used to request for additional resources or to return the resources. Additionally, monitoring the control channel also allows the wireless systems to understand how many different systems and systems of the same type exist.

As referenced previously, coordination of the allocation of parameters is beneficially effected in accordance with two methods of example embodiments. One is centralized approach and the other is a distributed approach. In the centralized approach, one of the wireless devices among is selected as the central controller from all of the systems that are sharing the spectrum. For example, a device 107 of system type C 103 may be chosen as a central controller of the system 100.

The selection process can be simple one in which the one of the device from the wideband is made a central controller as they span the entire spectrum. Illustratively, among all the wideband devices of the system type C 103, one device is selected as the central controller based on smallest or largest MAC address. Alternatively, the central controller may be selected from the devices competing among each other with the beacon 302, 308 being broadcast in the control channel fₒ to indicate that successful device is the central controller. In the interest of simplicity, the central controller is selected from the devices of the wideband system that first puts the beacon in the medium. Once the central controller is choosen, it remains as central controller for the entire lifetime or an interval of transmissions. As described in connection with an illustration below, an interval may be a period of time comprised of a plurality (e.g., 103) control information exchange intervals 301.

Once the central controller 107 is identified, all beacons 108 put by different wireless systems are understood by the central controller 107. Based on the information in the beacon the central controller 107 allocates the spectrum resource using air time fairness or bandwidth fairness. Illustratively, airtime fairness and bandwidth fairness is achieved by setting the relevant parameters (e.g., CWₘᵢₙ, CWₘₐₓ, etc.) may be effected in accordance with the methods described in U.S. Provisional Patent Applications serial numbers 60/489,685 filed July 23, 2003; 60/529,790 filed December 16, 2003; 60/449,854 filed September 3, 2003; 60/545, 319 filed February 17, 2004; and 60/483,792 filed June 30, 2003. All of these applications are to Shankar, et al. and the inventions therein are and assigned to the present assignee.

It is noted that these methods are merely illustrative and other methods within the purview of one of ordinary skill in the art, who has had the benefit of the present disclosure, may be used to set these parameters.

An illustration of an example embodiment is presently described. In the present example embodiment, bandwidth fairness is achieved in either a distributed or centralized control scheme. In the present illustration, the type A system 101 is a wireless LAN operating at 2.4 GHz; the type B system 102 is a Bluetooth system operating at 2.4 GHz; and the type C system 103 is a wideband LAN operating at 2.4 GHz. Moreover, a device of the system 101 transmits at 54 Mbits/s; a device of the second system 102 transmits at 1 Mbit/s; and a device of the third system transmits at 500 Mbits/s. Finally, in the present illustration, the first device desires to send 25 Mbits of information during a one minute interval spanning a number of control information exchange intervals 301; the second device desires to send 100 Mbits of information during the same one minute; and the third device desires to send 480 Mbits in the same one minute.

In this example embodiment, after receiving the requests from each of the systems 101-103, the control channel 106 or the central controller 107 will allocate 2 seconds of airtime to the first system 101; 25 seconds to the second system 102; and 1 second to the third system. It is noted, of course, that a plurality of devices from each system 101-103 may be allocated airtime according to the fairness methods of the example embodiments. The selection of only one device from each system is only for simplicity of discussion.

Upon the completion of the interval of time (in this example one minute), each device and system will have been afforded an opportunity to transmit and/or receive the desired amount of information in a particular interval of time. Naturally, this process may be repeated.

Fig. 3b is a conceptual diagram where spectrum fairness is achieved using time allocation to achieve airtime fairness. In the present example embodiment, the central controller 107 sends a beacon 309 periodically that indicates the control of time allocation among different system can be achieved by using parameters such as CWₘᵢₙ, Cwₘₐₓ or IFS or TXOP or by setting aside the time periodically for each system. The latter method is described below.

The beacon 309 transmits the transmission times and duration intervals of each system 101-103. In the present example embodiment, the beacon 309 is transmitted via the control channel 106 and indicates a starting time for each system to use the spectrum and the duration of the usage.

In order to achieve airtime fairness in the present example embodiment, duration is proportional to the requirements of individual systems. To this end, consider the special case where the transmission interval 311 of system 101 is identical to a transmission interval 312 of system 102 and to a transmission interval 313 is system 103. However, the bandwidths of the systems 101-103 are not the same. As such, system 103 transmits three times as much information during interval 313 as system 101 does during interval 312; and nine times as much information as system 102 does during interval 311. Accordingly, by granting equal access in time to each system, the example embodiments foster equal system access and allow each system to function at is optimal bit rate.

As described previously, whether spectrum fairness is achieved using time allocation or bandwidth allocation, according to certain example embodiments, a control channel may be used. This control channel may be used if the system 100 is centralized or distributed. Certain example embodiments incorporating the control channel in centralized and distributed channels are described presently.

In an example embodiment, a centralized control is effected to achieve spectrum access fairness. The centralized control may be realized using a dedicated control channel from a central node. For example, in the example embodiment, the control channel 106 may be from a device 107. This illustrative method is efficient and can be implemented with ease according to the example embodiments. In an illustrative embodiment, one device/station of any of the systems (101-103) is assigned to be the controller or AP which transmits the beacons, effects the modifications to the transmission parameters (e.g., TXOP, CWₘᵢₙ, etc.), and provides commands to each of the systems sharing the spectrum, as described in connection with the example embodiments of Figs. 3a and 3b.

Once the device has been selected, it will monitor the number of systems that are utilizing the unlicensed spectrum and will grant/deny resource requests that come from different systems based on bandwidth fairness or airtime fairness. If the goal of the spectrum etiquette is to have differentiated bandwidth fairness between the three systems in the example as described in connection with Figs. 1, 3a, the illustrative method adjusts the parameters of CSMA/CA such as CWmin, AIFS or TXOP limit to achieve the differentiation. For example fairness allocation based on CWₘᵢₙ n and IFS, may be as described in U.S. Provisional Patent Application serial number 60/529,790 and as described in Inter-Frame Space Based Service Differentiation For 802.11E Wireless LAN's" IEEE Vehicular Technology Conference (VTC), Fall, October 2003, Orlando, Florida to Shankar, et al.

Alternatively, a TXOP limit may be used. In an example embodiment, the TXOP is allocated commensurate with the requirements of each of the systems 101-103 of the system 100. For example, if system A 101 requires twice the airtime usage as system B 102, then the value of the TXOP allocated to A is twice that of B, or A can be given twice the time interval than type B in a periodic manner.

Similarly, in embodiments where spectrum access fairness is achieved by providing air time fairness, efficient coordination is achieved by the central controller which allocates time proportional to their requirements and shuts down other systems thus achieving airtime fairness.

In accordance with other example embodiments, there is no central controller (i.e., a distributed control method), and spectrum allocation fairness is achieved in accordance with certain example embodiments. In one embodiment, there is no central controller and each system 101-103 must first listen to the control channel 106 for a sufficient amount of time to determine how many systems are sharing the spectrum. All systems 101-103 broadcast their load, time occupancy, power level of the measurements taken in their own frequency band and other information in the control channel fₒ. Any wireless system making such a request for additional resources must monitor messages from all systems in the spectrum and then determine whether it can now admit the new request for additional requests or not. It is noted that the methods of achieving airtime and bandwidth fairness described in connection with the example embodiments that relate to the use of a central controller may be incorporated to the distributed control methods of the example embodiments. To wit, the methods to adjust communication parameters and the allocation of bandwidth and airtime may be used, and are thus not repeated as having been presented.

In addition to the example embodiments that incorporate the use of a control channel, spectrum allocation fairness may be achieved using methods and apparati of example embodiments described presently.

In certain previous example embodiments, a control channel was used to receive the parameters from each system, and to allocate spectrum use and coordinate communications. In accordance with other example embodiments, this exchange of information is effected by and among the individual systems function in a distributed wireless network. For example, in the example embodiments of Figs. 1-2b, each system 101-103 will transmit beacons 108 at regularly scheduled intervals. Each beacon will include system requirements through parameters described above. After sending out a beacon 108, the system will wait for a response from the any systems sharing the spectrum defined as a response interval. If no response is received, the system will adjust the parameters as proposed in the beacon. If responses are received within the response interval during the beacon interval, and it is evident that the requests are not in conformance to other systems, and hence the request may be dropped. The response from the system(s) may suggest alternatives in the MAC parameters or the time slots that this requesting system may use.

The invention having been described in detail in connection through a discussion of exemplary embodiments, it is clear that modifications of the invention will be apparent to one having ordinary skill in the art having had the benefit of the present disclosure. Such modifications and variations are included in the scope of the appended claims.

## Claims

1. A method of providing spectrum allocation fairness in a wireless network (100), the method comprising:
providing an unlicensed communication spectrum;
co-locating a plurality of wireless systems (101,102,103), the plurality of wireless systems sharing the unlicensed communication spectrum, wherein at least two of the plurality of wireless systems have different spectral bandwidths and channel capacities; and
determining the bandwidth requirements of each of the systems; wherein the method further comprises:
selecting as a central controller a device from the wireless system having the wider bandwidth from the plurality of the wireless systems;
receiving, by the central controller (107), the determined bandwidth requirements and allocating, by the central controller, a bandwidth (303,304,305)or a communication period (311,312,313) to each of the systems for a particular interval of time.

2. A method as recited in claim 1, wherein the method further comprises allocating Medium Access Control, MAC, sublayer parameters to each system.

3. A method as recited in claim 2, further comprising adjusting the parameters prior to the providing.

4. A method as recited in claim 1, wherein the allocating of the bandwidth further comprises limiting each system to a transmission rate.

5. A method as recited in claim 1, wherein the allocating of the communication time further comprises providing an identical communication time for each system.

6. A method as recited in claim 3, further comprising providing a control channel (106) that receives the MAC layer parameters and provides the adjusted MAC layer parameters.

7. A method as recited in claim 6, wherein the network is centralized.

8. A method as recited in claim 1, wherein the central controller provides a certain time slot to at least one device of each system during which the device can transmit and/or receive information.

9. A wireless network, comprising:
an unlicensed radio spectrum;
a central controller (107); and
a plurality of co-located wireless systems (101,102,103) sharing the unlicensed spectrum and at least two of the systems have different spectral bandwidth requirements and channel capacities;
wherein the wireless network is adapted to select as the central controller a device from the wireless system having the wider bandwidth from the plurality of the wireless systems;
and wherein the central controller is configured to, based on the bandwidth requirements of each station, allocate a bandwidth (303,304,305) or a communication period (311,312,313) to each of the systems for a particular interval of time.

10. The wireless network as recited in claim 9, wherein the central controller is further configured to allocate Medium Access Control, MAC, sub-layer parameters to each system.

11. The wireless network as recited in claim 10, configured to limit a transmission rate of each system in a particular interval of time.

12. The wireless network as recited in claim 9, configured to grant to each system an identical communication time for a particular interval of time.

13. The wireless network as recited in claim 10, further comprising a control channel for receiving the MAC layer parameters and for providing adjusted MAC layer parameters.

14. The wireless network as recited in claim 9, wherein the network is centralized.

15. The wireless network as recited in claim 9, configured to transmit a plurality of beacons (302,308) to the plurality of wireless systems at the commencement of each of a plurality of control information exchange intervals (301).

## Patentansprüche

1. Verfahren zum Vorsehen von Spektrumszuweisungsfaimess in einem drahtlosen Netzwerk (100), wobei das Verfahren die folgenden Schritte umfasst, wonach:
ein unlizensiertes Kommunikationsspektrum vorgesehen wird;
mehrere Drahtlossysteme (101, 102, 103) gemeinsam angeordnet werden, wobei die mehreren Drahtlossysteme das unlizensierte Kommunikationsspektrum gemeinsam nutzen,
wobei mindestens zwei der mehreren Drahtlossysteme unterschiedliche spektrale Bandbreitenanforderungen und Kanalkapazitäten aufweisen; und
die Bandbreitenanforderungen von jedem der Systeme ermittelt werden;
wobei gemäß dem Verfahren weiterhin:
eine Vorrichtung aus dem Drahtlossystem mit der größeren Bandbreite als ein zentraler Controller aus den mehreren Drahtlossystemen ausgewählt wird;
von dem zentralen Controller (107) die ermittelten Bandbreitenanforderungen empfangen werden und von dem zentralen Controller eine Bandbreite (303, 304, 305) oder eine Kommunikationsperiode (311, 312, 313) jedem der Systeme für ein bestimmtes Zeitintervall zugewiesen wird.

2. Verfahren nach Anspruch 1, wobei gemäß dem Verfahren weiterhin jedem System Medienzugriffssteuerungs-, MAC-, Sublayer-Parameter zugewiesen werden.

3. Verfahren nach Anspruch 2, wonach weiterhin die Parameter vor der Bereitstellung eingestellt werden.

4. Verfahren nach Anspruch 1, wobei die Zuweisung der Bandbreite weiterhin die Begrenzung jedes Systems auf eine Übertragungsrate umfasst.

5. Verfahren nach Anspruch 1, wobei die Zuweisung der Kommunikationszeit weiterhin die Bereitstellung einer identischen Kommunikationszeit für jedes System umfasst.

6. Verfahren nach Anspruch 3, wonach weiterhin ein Steuerkanal (106) vorgesehen wird, der die MAC-Layer-Parameter empfängt und die eingestellten MAC-Layer-Parameter bereitstellt.

7. Verfahren nach Anspruch 6, wobei das Netzwerk zentralisiert wird.

8. Verfahren nach Anspruch 1, wobei der zentrale Controller einen bestimmten Zeitschlitz für mindestens eine Vorrichtung jedes System bereitstellt, in dem die Vorrichtung Informationen übertragen und/oder empfangen kann.

9. Drahtloses Netzwerk, umfassend:
ein unlizensiertes Funkspektrum;
einen zentralen Controller (107); sowie
mehrere gemeinsam angeordnete Drahtlossysteme (101, 102, 103), die das unlizensierte Kommunikationsspektrum gemeinsam nutzen,
wobei mindestens zwei der Systeme unterschiedliche spektrale Bandbreitenanforderungen und Kanalkapazitäten aufweisen;
wobei das drahtlose Netzwerk so eingerichtet ist, dass es eine Vorrichtung aus dem Drahtlossystem mit der größeren Bandbreite als den zentralen Controller aus den mehreren Drahtlossystemen auswählt;
und wobei der zentrale Controller so konfiguriert ist, dass er, basierend auf den Bandbreitenanforderungen jeder Station, jedem der Systeme eine Bandbreite (303, 304, 305) oder eine Kommunikationsperiode (311, 312, 313) für ein bestimmtes Zeitintervall zuweist.

10. Drahtloses Netzwerk nach Anspruch 9, wobei der zentrale Controller weiterhin so konfiguriert ist, dass er jedem System Medienzugriffssteuerungs-, MAC-, Sublayer-Parameter zuweist.

11. Drahtloses Netzwerk nach Anspruch 10, das so konfiguriert ist, dass es eine Übertragungsrate jedes Systems in einem bestimmten Zeitintervall begrenzt.

12. Drahtloses Netzwerk nach Anspruch 9, das so konfiguriert ist, dass es jedem System eine identische Kommunikationszeit für ein bestimmtes Zeitintervall gewährt.

13. Drahtloses Netzwerk nach Anspruch 10, weiterhin umfassend einen Steuerkanal, um die MAC-Layer-Parameter zu empfangen und um eingestellte MAC-Layer-Parameter bereitzustellen.

14. Drahtloses Netzwerk nach Anspruch 9, wobei das Netzwerk zentralisiert ist.

15. Drahtloses Netzwerk nach Anspruch 9, das so konfiguriert ist, dass es zu Beginn von jedem von mehreren Steuerinformationsaustauschintervallen (301) eine Mehrzahl von Beacons (302, 308) zu den mehreren Drahtlossystemen überträgt.

## Revendications

1. Procédé de fourniture d'équité d'allocation de spectre dans un réseau sans fil (100), le procédé comprenant :
la fourniture d'un spectre de communication sans licence ;
le co-positionnement d'une pluralité de systèmes sans fil (101, 102, 103), la pluralité de systèmes sans fil partageant le spectre de communication sans licence,
dans lequel au moins deux de la pluralité de systèmes sans fil ont des largeurs de bande spectrale et des capacités de canal différentes ; et
la détermination des exigences de largeur de bande de chacun des systèmes ;
dans lequel le procédé comprend en outre :
la sélection, comme un dispositif central de commande, d'un dispositif à partir du système sans fil ayant la plus grande largeur de bande parmi la pluralité des systèmes sans fil ;
la réception, par le dispositif central de commande (107), des exigences de largeur de bande déterminées et l'allocation, par le dispositif central de commande, d'une largeur de bande (303, 304, 305) ou d'une période de communication (311, 312, 313) à chacun des systèmes pour un intervalle de temps particulier.

2. Procédé selon la revendication 1, dans lequel le procédé comprend en outre l'allocation de paramètres de sous-couche de contrôle d'accès au support, MAC, à chaque système.

3. Procédé selon la revendication 2, comprenant en outre l'ajustement des paramètres avant la fourniture.

4. Procédé selon la revendication 1, dans lequel l'allocation de la largeur de bande comprend en outre la limitation de chaque système à un débit de transmission.

5. Procédé selon la revendication 1, dans lequel l'allocation du temps de communication comprend en outre la fourniture d'un temps de communication identique pour chaque système.

6. Procédé selon la revendication 3, comprenant en outre la fourniture d'un canal de commande (106) qui reçoit les paramètres de couche MAC et fournit les paramètres de couche MAC ajustés.

7. Procédé selon la revendication 6, dans lequel le réseau est centralisé.

8. Procédé selon la revendication 1, dans lequel le dispositif central de commande fournit un certain intervalle de temps à au moins un dispositif de chaque système durant lequel le dispositif peut transmettre et/ou recevoir des informations.

9. Réseau sans fil comprenant :
un spectre radio sans licence ;
un dispositif central de commande (107) ; et
une pluralité de systèmes sans fil (101, 102, 103) co-positionnés partageant le spectre sans licence et au moins deux des systèmes ont des exigences de largeur de bande spectrale et des capacités de canal différentes ;
dans lequel le réseau sans fil est adapté pour sélectionner comme le dispositif central de commande un dispositif à partir d'un système sans fil ayant la plus grande largeur de bande parmi la pluralité des systèmes sans fil ;
et dans lequel le dispositif central de commande est configuré pour, sur la base des exigences de largeur de bande de chaque station, allouer une largeur de bande (303, 304, 305) ou une période de communication (311, 312, 313) à chacun des systèmes pour un intervalle de temps particulier.

10. Réseau sans fil selon la revendication 9, dans lequel le dispositif central de commande est configuré en outre pour allouer des paramètres de sous-couche de contrôle d'accès au support, MAC, à chaque système.

11. Réseau sans fil selon la revendication 10, configuré pour limiter un débit de transmission de chaque système dans un intervalle de temps particulier.

12. Réseau sans fil selon la revendication 9, configuré pour octroyer à chaque système un temps de communication identique pour un intervalle de temps particulier.

13. Réseau sans fil selon la revendication 10, comprenant en outre un canal de commande pour recevoir les paramètres de couche MAC et pour fournir des paramètres de couche MAC ajustés.

14. Réseau sans fil selon la revendication 9, dans lequel le réseau est centralisé.

15. Réseau sans fil selon la revendication 9, configuré pour transmettre une pluralité de balises (302, 308) à la pluralité de systèmes sans fil au début de chacun d'une pluralité d'intervalles d'échange d'informations de commande (301).
